**Europäisches Patentamt**

**European Patent Office**

**Office européen des brevets**

(19)

(11) Veröffentlichungsnummer : **0 061 415**
**B1**

(12) # EUROPÄISCHE PATENTSCHRIFT

(45) Veröffentlichungstag der Patentschrift :
07.08.85

(21) Anmeldenummer : **82710012.4**

(22) Anmeldetag : **19.03.82**

(51) Int. Cl.⁴ : **F 16 K   3/34, F 16 K 47/06**

(54) **Ventil für hydraulische Systeme.**

(30) Priorität : **20.03.81 DE 3110907**

(43) Veröffentlichungstag der Anmeldung :
**29.09.82 Patentblatt 82/39**

(45) Bekanntmachung des Hinweises auf die Patenterteilung : **07.08.85 Patentblatt 85/32**

(84) Benannte Vertragsstaaten :
**AT CH FR GB IT LI NL SE**

(56) Entgegenhaltungen :
**DE-A- 1 550 435**
**DE-A- 2 745 317**
**DE-B- 1 147 450**
**DE-B- 1 804 026**
**DE-C-   652 463**
**FR-A- 1 291 716**
**FR-A- 2 156 942**
**GB-A- 1 223 830**
**US-A- 3 987 999**

(73) Patentinhaber : **Johann Weiss Maschinenbau**
**D-7799 Illmensee (DE)**

(72) Erfinder : **Weiss, Johann**
**Hauptstrasse**
**D-7799 Illmensee (DE)**

(74) Vertreter : **Hiebsch, Gerhard F., Dipl.-Ing.**
**Erzbergerstrasse 5A Postfach 464**
**D-7700 Singen 1 (DE)**

EP 0 061 415 B1

# 0 061 415

**Beschreibung**

Die Erfindung betrifft ein Ventil für hydraulische Systeme mit wenigstens einer zwischen Eingang und Ausgang für ein Strömungsmedium angeordneten Durchgangsbohrung, die an einer Außenfläche eines von einer Hülse umgebenen Ventilgehäuses mündet, wobei an dieser Mündung in die Außenfläche eine Feinsteuernut eingeformt ist, deren Tiefe zur Mündung der Durchgangsbohrung hin zunimmt.

Ein derartiges Ventil mit von einer Stellhülse umfangenem hohlen Ventilgehäuse ist der DE-B2-18 04 026 zu entnehmen. Vom Hohlraum des Ventilgehäuses gehen radiale Durchgangs- oder Drosselbohrungen für das Strömungsmedium aus, mit denen die Strömung gesteuert wird ; in Abhängigkeit von der Größe der Berührungsbereiche zwischen den einander gegenüberstehenden Flächen gelangt ein mehr oder minder großer Durchflußstrom durch das Ventil. An einigen der Mündungen jener Durchgangsbohrungen sind in Draufsicht dreieckförmige Kerben als sog. Feinsteuernuten vorgesehen, die leicht mittels eines Prägestempels eingebracht werden können. Die Spitzen dieser Dreiecke weisen in der ringförmigen Außenfläche in achsparallele Richtung, die Länge dieser jeweils ihre Mündung umgebenden dreieckigen Vertiefungen mißt nur wenig mehr als der Bohrungsdurchmesser.

Die FR-A-2 156 942 zeigt am Umfang eines Ventilkolbens eine schraubenlinienförmige Einkerbung konstanter oder abnehmender Kerbtiefe. Diese Einkerbung ist mehrfach um jenen zylindrischen Umfang geführt und bildet einen Durchgang für das Strömungsmedium.

Als Nachteil der bekannten Ventile und Drosseln für Strömungsmedien — auch jener nach der DE-B$_2$-18 04 026 sowie der FR-A-2 156 942 — hat sich in der Praxis vor allem herausgestellt, daß die niedrigste konstante Durchflußmenge bei 0,4 Litern je Minute liegt ; eine derartige Durchflußmenge jedoch ist in den meisten Fällen zu groß, die bekannten Ventile sind also dann unbrauchbar. Auch verursacht der Innendruck eine Verformung der Ventil- oder Drosselhülse ; bei Drücken bis zu 350 bar setzt sich die Drosselhülse zwischen den Strömungskanälen des Ventilkörpers fest, über denen sie sich weitet. Aus diesem Grunde ist es beispielsweise nur bedingt möglich, herkömmliche Ventile unter Druck zu verstellen, da die drucklosen Kanten Ventilgehäuse und Stellhülse beschädigen.

Angesichts dieser Gegebenheiten hat sich der Erfinder das Ziel gesetzt, ein Ventil der eingangs erwähnten Art zu schaffen, das eine sehr geringe Durchflußmenge, also unter 0,4 Liter je Minute, ermöglicht sowie in einfacher Weise herstellbar ist.

Zur Lösung dieser Aufgabe führt, daß die von der Mündung der Durchgangsbohrung ausgehende Feinsteuernut als Kurvenstück ausgebildet ist, das mit einer Radialebene durch das Ventilgehäuse einen spitzen Neigungswinkel einschließt und dessen Länge einem Mehrfachen des Mündungsdurchmessers entspricht.

Jene erfindungsgemäßen Kurvenstücke bilden Dosierkurven für das Hydraulikmedium, und zwar für einen konstanten Durchfluß im unteren Bereich ab 0,04 ltr. je Min. — es werden also hier Durchflußmengen erreicht, die 10 — fach geringer sind als die bisher an der unteren Grenze möglichen Dosiermengen. Auch für Nadelventile wird erfindungsgemäß eine derartige Reduzierung der Durchflußmengen erreicht ; für im Handel befindliche Nadelventile ist als untere Grenze derzeit der Durchfluß von 0,2 ltr. je Min. bekannt.

Die Kurvenstücke sind von sehr geringem Querschnitt, wobei die Tiefe und die Kerbweite an der Mündung der Durchgangsbohrung einen Bruchteil von deren Durchmesser betragen ; dieser mißt beispielsweise 2 mm, wohingegen die Tiefe dann mit etwa 0,3 mm angenommen wird. Jener Querschnitt des Kurvenstückes ist bevorzugt dreiecksförmig mit einem Öffnungswinkel von beispielsweise 60°. Die Tiefe des Querschnittes des Kurvenstückes soll von der Mündung der Durchgangsbohrung an zu der — aus der DE-B$_2$-18 04 026 an sich bekannten — Spitze der Kurve stetig abnehmen ; an dieser Kurvenspitze läuft das Kurvenstück stufenlos aus.

In der Praxis können diese Kurvenstücke problemlos mit einem spanabhebenden Stahl während des Drehens eingeformt werden.

Die beschriebenen Kurvenstücke verlaufen erfindungsgemäß über einen Teil jener Außenfläche, jedoch zur Achse des Ventils weder achsparallel, noch im rechten Winkel dazu ; die bevorzugte Lage der Kurvenstücke wird von einem spitzen Neigungswinkel zu einer Radialebene des Ventilgehäuses bestimmt, der in bevorzugter Weise etwa 15° beträgt. Darüber hinaus soll der Krümmungsradius des Kurvenstückes etwa dem Durchmesser des Ventilgehäuses entsprechen, in einem gewählten Ausführungsbeispiel etwa 26 mm betragen.

Erfindungsgemäß sind die Kurvenspitzen in unterschiedlichem Abstand zu einer Kante der Außenfläche angeordnet, vorteilhafterweise ist ihre Lage dadurch vorgegeben, daß die Kurvenspitzen eine Gerade bestimmen, deren Abstand von jener Kante an einem ausgewählten ersten Kurvenstück der abgewickelt dargestellten Außenfläche zu deren letztem Kurvenstück stetig zunimmt, d. h. am Ventilkörper selbst liegen die Kurvenspitzen auf einer Schraubenlinie geringer Ganghöhe.

Bei der beschriebenen Lage der Kurvenstücke übergreifen diese — quer zur Ventilachse gesehen — die jeweils benachbarte Mündung zu dieser in axialem Abstand ; ist beispielsweise nur jede zweite der Mündungen mit dem Kurvenstück versehen, so kann ein Kurvenstück eine kurvenstückfreie Mündung übergreifen.

Die Länge der Kurvenstücke entspricht in abgewickeltem Zustand etwa 1/6 bis 1/7 der Ringflächenlänge, im gewählten Ausführungsbeispiel 10 mm.

2

Im Rahmen der Erfindung liegt es, daß sich der Anfangswinkel zwischen Kurvenstück und Radialebene bzw. Umfangskerbung in Einschraubdrehrichtung des Ventilgehäuses öffnet; bei einem Rechtsgewinde liegt also die Kurvenspitze rechts vom Anfang des Kurvenstückes.

In einer günstigen Weiterbildung der erfindungsgemäßen Kurvenstücke sind die Durchgangsbohrungen — und damit die Kurvenstücke selbst — durch eine ringartige Umfangskerbung in der Außenfläche verbunden. Diese Umfangskerbung verhindert die Verformung der Hülse weitestgehend, da sie dort, wo bisher die Hülsenverformung erzwungen wird, einen Druckabbau veranlaßt. Die Folge hiervon ist zum einen — wie gesagt — das Fehlen der Verformung der Hülse und zum anderen die Möglichkeit, die Hülse auch bei höchsten Drücken mühelos zu verstellen, ohne daß es zu irgendwelchen Beschädigungen käme.

Nach einem weiteren Merkmal der Erfindung entsprechen Form des Querschnitts der Umfangskerbung sowie deren Öffnungswinkel jener bzw. jenem der Kurvenstücke.

Um die Handhabung und Einstellung des Ventils zu vereinfachen hat es sich als günstig erwiesen, an wenigstens einem der aus der Hülse ragenden Ende des Ventilgehäuses zumindest eine — an sich aus der US-A-3 987 999 bekannten — Markierungseinrichtung zum Kenntlichmachen des sich beim Drehen des Ventilgehäuses bzw. der Hülse ändernden Abstandes jener Markierungseinrichtung von einer benachbarten Hülsenkante und als Markierungseinrichtungen mehrere — parallel zueinander verlaufende — Markierungsringe vorzusehen, deren jeweiliger Abstand voneinander dem axialen Bewegungsweg des Ventilgehäuses bei einer Umdrehung entspricht. Vier Markierungsringe erlauben also die Beobachtung des Schraubweges während vier Umdrehungen.

In der Innenfläche der Hülse oder des entsprechenden Hüllelements ist eine ringartige Rinne vorgesehen, deren der Außenfläche nächstliegende Rinnenkante vor der Einschraubbewegung des Ventilgehäuses etwa der Außenflächenkante anliegt und nach der Einschraubbewegung die Durchflußbohrungen der Außenfläche oder etwa die Umfangskerbung berührt, wobei die andere Rinnenkante der Rinne stets in axialem Abstand zur Außenflächenkante steht.

Ventile des erfindungsgemäßen Aufbaus bringen sowohl im hydraulischen Betrieb als auch beim Einbau in pneumatische Leitungen erhebliche Vorteile der weiter oben geschilderten Art.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 den Längsschnitt durch ein Drossel/Rückschlag-Ventil;

Figur 1a einen Ausschnitt aus Fig. 1 in geänderter Lage;

Figur 2 eine Schrägsicht auf das Drossel/Rückschlag-Ventil in teilweise geschnittener Darstellung;

Figur 3 die Draufsicht auf einen Teil der Fig. 1;

Figur 4 den Querschnitt durch Fig. 3 nach deren Linie IV-IV;

Figur 5 ein vergrößertes Detail aus einer Zylinderfläche der Fig. 3 entsprechend deren Feld V;

Figur 6 die Abwicklung der Zylinderfläche aus Fig. 3;

Figur 7 einen vergrößerten Teilschnitt durch die Zylinderfläche etwa nach Linie VII-VII in Fig. 6;

Figur 8 den Längsschnitt durch ein Drosselventil;

Figur 9 ein weiteres Beispiel eines Drosselventils, ebenfalls im — teilweise wiedergegebenen — Längsschnitt;

Figur 10 ein Diagramm für hydraulische Kenngrößen;

Figur 11 die Draufsicht auf ein Drossel/Rückschlag-Ventil zur Erläuterung der Fig. 10.

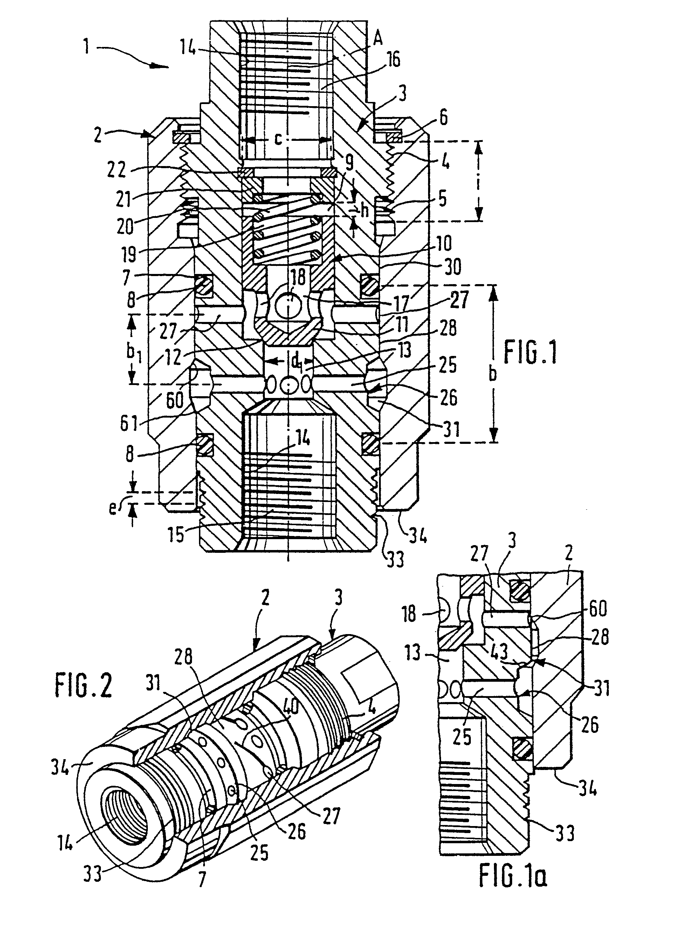

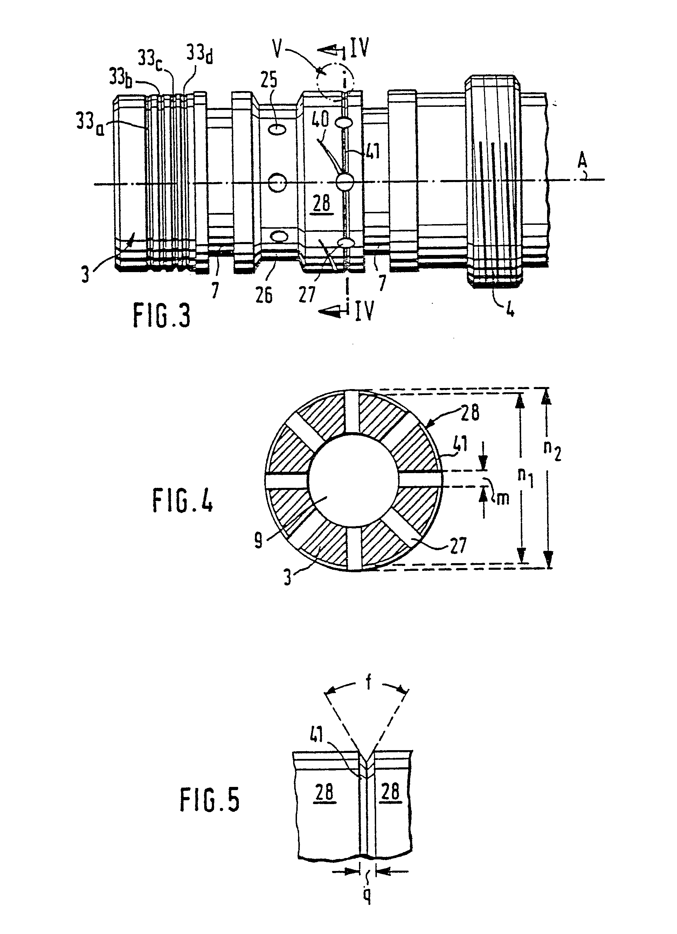

Fig. 1 zeigt ein Drossel/Rückschlag-Ventil 1 zum Einbau in eine nicht weiter dargestellte Hydraulikleitung für einen Durchfluß in Richtung der Ventilachse A.

In einer Hülse 2 des Drossel/Rückschlag-Ventils 1 lagert ein in diese eingeschobenes Ventilgehäuse 3, das mit einem Gewindekragen 4 in ein Hülsengewinde 5 der Länge i eingebracht und in der Hülse 2 durch einen Sprengring 6 gegen ein Herausdrehen gesichert ist. In Umfangsnuten 7 des Ventilgehäuses 3 sind — in axialem Abstand b voneinander — O-Ringe 8 angebracht.

Das Ventilgehäuse 3 weist einen zylindrischen Kolbenraum 9 für einen Kolben 10 auf, dessen sich konisch verjüngender Kolbenkopf 11 mit einer Ringschulter 12 den Ventilsitz bildet. Diese Ringschulter 12 befindet sich am Übergang zwischen dem Kolbenraum 9 eines Durchmessers c von beispielsweise 11 mm einerseits und einer Axialbohrung 13 geringeren Durchmessers $d_1$ von beispielsweise 6 mm anderseits. An diese Axialbohrung 13 schließt ein mit Innengewinde 14 versehener Anschlußraum 15 als Eingang an, dessen Weite jener des Kolbenraums 9 etwa entspricht. Ebenfalls findet sich im anderen Ende des Ventilkörpers 3 ein entsprechender Anschlußraum 16, der im gewählten Ausführungsbeispiel den Ausgang bildet.

Der Kolbenkopf 11 ist mit einer axialen Bohrung als Innenraum 17 versehen, der durch Radialbohrungen 18 mit dem Kolbenraum 9 hydraulisch verbunden ist.

An jenen Innenraum 17 schließt ein Federraum 19 im Kolben 10 an. Dieser Federraum 19 nimmt eine Druckfeder 20 auf, die andernends in einem Lagerring 21 festliegt, der sich gegen einen Seegerring 22 abstützt. Diese Druckfeder 20 hält den Kolbenkopf 11 an der Ringschulter 12. Der Kolbenhub ist mit h bezeichnet.

Sowohl von der Axialbohrung 13 als auch vom Kolbenraum 9 gehen radiale Strömungskanäle 25 bzw. 27 aus und durchsetzen das Ventilgehäuse 3 in einem Abstand $b_1$ voneinander von beispielsweise 9 mm. Die Strömungskanäle 25 der Axialbohrung 13 münden in einer Umfangsnut 26 des Ventilgehäuses 3,

während die — im gewählten Ausführungsbeispiel acht — Strömungskanäle bzw. Durchgangsbohrungen 27 des Kolbenraumes 9 in einer zylindrischen Außenfläche 28 enden. Letztere wird einerseits von jener Umfangsnut 26 begrenzt sowie anderseits von einer der Nuten 7 für einen O-Ring 8.

In die Innenwandfläche 30 der Hülse 2 ist eine ringartige Rinne 31 eingeformt, die jener Umfangsnut 26 des Ventilgehäuses 3 etwa gegenübersteht. Die relative Position der Umfangsnut 26 zur Rinne 31 kann durch Schraubdrehung des Ventilgehäuses 3 an der Gewindepaarung 4/5 eingestellt werden, wobei die jeweilige Einstellung durch vier Markierungsnuten 33 kenntlich gemacht ist ; da der Abstand e zwischen den Markierungsnuten 33 dem Maße des axialen Schubweges des Ventilgehäuses 3 bei einer ganzen Umdrehung (360°) entspricht, gibt die Zahl der außerhalb der Hülsenkante 34 erkennbaren Markierungsnuten 33 die Anzahl durchgeführter Umdrehungen an. Der besseren Übersichtlichkeit halber sind in Fig. 3 die vier Markierungsnuten mit $33_a$, $33_b$, $33_c$ und $33_d$ bezeichnet.

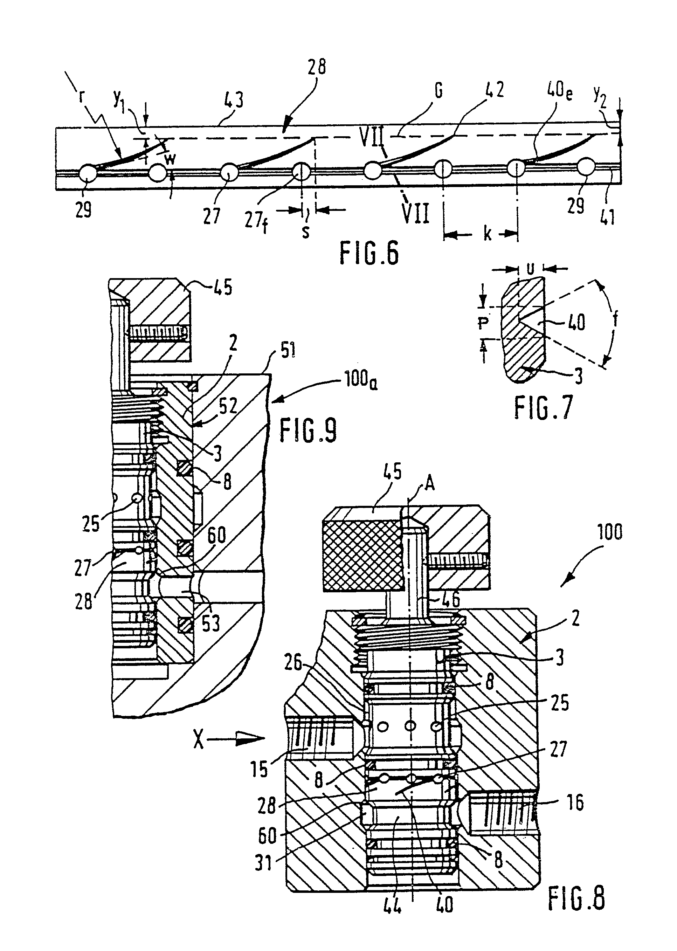

Wie die Fig. 2 und 3 deutlich werden lassen, sind in die zylindrische Außenfläche 28 endliche Kurvenstücke 40 eingeformt, die an den Durchgangsbohrungen 27 enden. Deren Mündungen 29 sind durch eine endlose Umfangskerbung 41 miteinander verbunden ; diese Umfangskerbung 41 berührt die Kanten der Mündungen 29 der Durchgangsbohrungen 27 neben den Kurvenstücken 40. Im gewählten Beispiel beträgt der innere Durchmesser $n_1$ der Umfangskerbung 41 21,5 mm, hingegen der Durchmesser $n_2$ des jene Ringfläche 28 erzeugenden Ventilgehäuseabschnittes 22 mm bei einer Weite m der Durchgangsbohrung 27 von 2 mm. Der Kerbwinkel f des V-förmigen Querschnittes der Umfangskerbung 41 mißt 60°, die Kerbweite q 0,4 mm. Im übrigen läßt Fig. 7 erkennen, daß auch die Kurvenstücke 40 von V-förmigem Querschnitt mit einem Kerbwinkel f von 60° sind. Deren Kerbweite ist mit p bezeichnet.

Die Außenfläche 28 ist in Fig. 6 in vergrößertem Maßstab abgewickelt und zeigt in einem Abstand k voneinander die Mündungen 29 der acht Durchgangsbohrungen 27, die miteinander durch jene endlose Umfangskerbung 41 verbunden sind. Zu dieser verlaufen vier Kurvenstücke 40 — von jener zweiten der Mündungskanten 29 ausgehend — in einem Neigungswinkel w von etwa 15° mit einem Krümmungsradius r von beispielsweise 26 mm. Diese Kurvenstücke 40 enden jeweils im übergreifenden Abstand s vom Mittelpunkt des folgenden Strömungskanals (27 f in Fig. 6), wobei jener Abstand s etwa der Weite bzw. dem Durchmesser m der Durchgangsbohrung 27 entspricht. Der Randabstand $y_1$ (z. B. 1,2 mm) der in Fig. 6 linken Kurvenspitze 42 von der benachbarten Flächenkante 43 ist kürzer als der entsprechende Randabstand $y_2$ (z. B. 1,7 mm) des rechten Kurvenstückes $40_e$, was in der Zeichnung mittels einer Hilfsgeraden G durch die Kurvenspitzen 42 deutlich gemacht ist. Die Tiefe u der Kurvenstücke 40 (Fig. 7) beträgt am Strömungskanal 27 etwa 0,3 mm und nimmt stetig bis zur Kurvenspitze 42 ab, wo das Kurvenstück 40 ausläuft.

Auch bei einem in Fig. 8 in eine — nicht weiter dargestellte — Schalttafel eingebauten Drosselventil 100 ist die Außenfläche 28 mit ihren Kurvenstücken 40 und der Umfangskerbung 41 zu erkennen. Das Ventilgehäuse 3 ist hier sowohl mit den O-Ringen 8 an einer Seite der Außenfläche 28 und an der davon abgekehrten Seite der Umfangsnut 26 der anderen Strömungskanäle 25 versehen als auch mit einem O-Ring 80 zwischen Strömungskanalzone 25 und den Durchgangsbohrungen 27. Der Strömungskanalzone 25 ist als Eingang ein radialer Anschlußvorraum 15 zugeordnet, während der dazu höhenversetzte andere radiale Anschlußvorraum 16 als Ausgang von einer der Außenfläche 28 in Strömungsrichtung x nachgeordneten ringförmigen Auslaßnut 44 ausgeht. Die Verstellung des Ventilgehäuses 3 erfolgt hier über einen Stellknopf 45 an einer Stellwelle 46.

Bei einem Drosselventil $100_a$ zum Einbau in ein anderes Gerät 51 ist die Hülse 2 an ihrer Außenseite 52 mit Ringnuten 53 für O-Ringe 8 versehen. Der jener Außenfläche 28 nachgeordneten Auslaßnut 44 steht eine Auslaßöffnung 53 in der Hülse 2 gegenüber, der eine — in der nicht wiedergegebenen anderen Hälfte des Drosselventils $100_a$ angeordnete und ebenfalls radiale — Einlaßöffnung entspricht.

Sowohl die ringartige Rinne 31 an der Innenwandfläche 30 der Hülse 2 als auch eine der Auslaßnut 44 im Drosselventil 100 gegenüberliegende Hülsenrinne 31 weisen eine Rinnenkante 60 auf, die jener Ringfläche 28 benachbart ist. Vor Beginn der Einschraubbewegung des Ventilgehäuses 3 (Lage z. B. in Fig. 1) liegt diese Rinnenkante 60 der zu ihr gerichteten Kante 43 der Außenfläche 28 etwa an. Im Laufe der Schraubbewegung wandern die beiden Kanten 43 und 60 gegeneinander, wobei die Rinne 31 sich an jener Außenfläche 28 vorbeibewegt bis in die in Fig. 1a gezeigte Lage, in der die Rinnenkante 60 an den Durchgangsbohrungen 27 steht — auch hier bleibt die andere Rinnenkante 61 in Abstand zur Flächenkante 43.

Der Durchfluß des Hydraulikmediums, also beispielsweise einer Ölemulsion, ist zufolge der an der Außenfläche 28 vorgesehenen Kurvenstücke 40 bis zu 0,0 ℓ Liter je Minute einzustellen und damit um ein Zehnfaches geringer als bei den auf dem Markt befindlichen Hydraulikventilen. Die als Drosselbohrungen wirkenden Durchgangsbohrungen 27 der Außenfläche 28 sind durch die Umfangskerbung 41 in der Lage, Druckspitzen zu verhindern und damit die Verformung der Hülse 2 weitgehend aufzuheben, die bei Drücken bis zu 350 bar sonst an dieser Hülse 2 zwischen den Strömungskanälen 25 und den Durchgangsbohrungen 27 des Ventilgehäuses 3 als Weitung auftritt. Deshalb können herkömmliche Ventile unter Druck kaum verstellt werden ; die drucklosen Kanten beschädigen das Ventilgehäuse 3 und die Hülse 2.

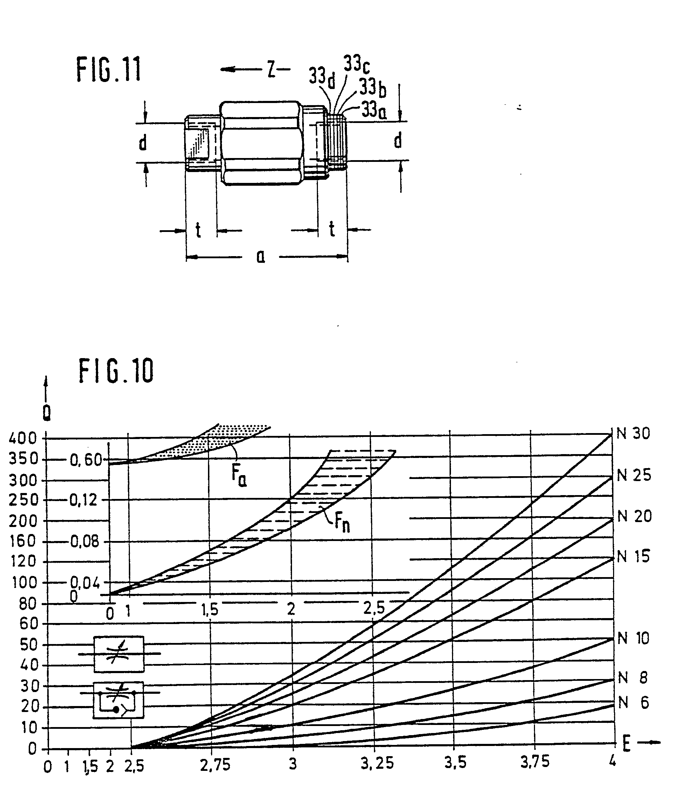

Fig. 10 zeigt Nennwertkurven N entsprechend der nachfolgenden Tabelle, in der für jeden Nennwert der Anschlußdurchmesser d, die Gesamtlänge a und die Anschlußtiefe t für die einzelnen Ventilgrößen zu

4

erkennen sind. Eine Erläuterung hierzu gibt Fig. 11, aus der auch die Ventileinstellung dank der Markierungsnuten 33a bis 33d und die Einstelldrehrichtung Z zu entnehmen sind :

| N' | d | a | t |
|---|---|---|---|
| 6 | 1/4" | 65 | 12 |
| 8 | 3/8" | 75 | 12 |
| 10 | 1/2" | 80 | 14 |
| 15 | 3/4" | 100 | 16 |
| 20 | 1" | 110 | 18 |
| 25 | 1 1/4" | 130 | 20 |
| 30 | 1 1/2" | 150 | 22 |

Fig. 10 zeigt also jene Nennwertkurven über der Einheit E (Einstellwert/Umdrehungen) ; die Ordinate gibt den Durchflußstrom Q in 1/min wieder. Das Feld $F_a$ zeigt den Kennwertbereich für alte Ventilausführungen, das Feld $F_n$ die entsprechenden Werte für die erfindungsgemäßen Kenngrößen.

Die Betriebsbedingungen können der nachfolgenden Tabelle entnommen werden :

| Druckflüssigkeit | Mineraloel nach DIN 51524 und DIN 51525 |
|---|---|
| Temperaturbereich | −30 bis + 80°C |
| Viskositätsbereich | 2,8 bis 380 cSt |
| Betriebsdruck | 5 bis 320 bar |
| Prüfdruck | 250 bar |

**Patentansprüche**

1. Ventil für hydraulische Systeme mit wenigstens einer zwischen Eingang (15 bzw. 16) und Ausgang (16 bzw. 15) für ein Strömungsmedium angeordneten Durchgangsbohrung (27), die an einer Außenfläche (28) eines von einer Hülse (2) umgebenen Ventilgehäuses (3) mündet, wobei an dieser Mündung (29) in die Außenfläche (28) eine Feinsteuernut (40) eingeformt ist, deren Tiefe (u) zur Mündung (29) der Durchgangsbohrung (27) hin zunimmt, dadurch gekennzeichnet, daß die von der Mündung (29) der Durchgangsbohrung (27) ausgehende Feinsteuernut als Kurvenstück (40) ausgebildet ist, das mit einer Radialebene durch das Ventilgehäuse (3) einen spitzen Neigungswinkel (w) einschließt und dessen Länge einem Mehrfachen des Mündungsdurchmessers (m) entspricht.

2. Ventil nach Anspruch 1, dadurch gekennzeichnet, daß die Tiefe (u) sowie die Kerbweite (p) des Kurvenstücks (40) an der Mündung (29) der Durchgangsbohrung (27) einen Bruchteil von deren Durchmesser (m) betragen.

3. Ventil nach Anspruch 1 oder 2, dadurch gekennzeichnet, daß das Kurvenstück (40) mit einer Radialebene der Außenfläche (28) einen Neigungswinkel (w) von etwa 15° einschließt.

4. Ventil nach einem der Ansprüche 1 bis 3, dadurch gekennzeichnet, daß der Krümmungsradius (r) des Kurvenstückes (40) etwa dem Durchmesser des Ventilgehäuses (3) entspricht.

5. Ventil nach einem der Ansprüche 1 bis 4, dadurch gekennzeichnet, daß das Kurvenstück (40) einen etwa dreiecksförmigen Querschnitt aufweist, wobei der Öffnungswinkel (f) des dreiecksförmigen Querschnittes bevorzugt 60° beträgt.

6. Ventil nach wenigstens einem der Ansprüche 1 bis 5 mit in Spitzen endenden Feinsteuerkurven, dadurch gekennzeichnet, daß die Kurvenspitze (42) der Kurvenstücke (40) in unterschiedlichen Abständen (y) zu einer Kante (43) der Außenfläche (28) angeordnet sind.

7. Ventil nach Anspruch 6, dadurch gekennzeichnet, daß die Kurvenspitzen (42) der Kurvenstücke (40) eine Gerade (G) bestimmen, deren Abstand ($y_1$, $y_2$) von der Flächenkante (43) am ersten Kurvenstück (40) der abgewickelt dargestellten Außenfläche (28) zu deren letztem Kurvenstück ($40_e$) stetig zunimmt.

8. Ventil nach wenigstens einem der Ansprüche 1 bis 7, dadurch gekennzeichnet, daß die Länge der abgewickelten Außenfläche (28) etwa der sechs- bis siebenfachen Länge des Kurvenstückes (40) entspricht.

9. Ventil nach wenigstens einem der Ansprüche 1 bis 8, dadurch gekennzeichnet, daß die Kurvenspitze (42) eines Kurvenstückes in Richtung des Neigungswinkels (w) die benachbarte Mündung (29) übergreift.

10. Ventil mit in der Hülse durch ein Gewinde gehaltenem Ventilgehäuse nach wenigstens einem der Ansprüche 1 bis 9, dadurch gekennzeichnet, daß sich der Neigungswinkel (w) zwischen Kurvenstück (40) und Radialebene in Einschraubdrehrichtung öffnet.

5

11. Ventil nach wenigstens einem der Ansprüche 1 bis 10, dadurch gekennzeichnet, daß mehrere radiale Durchgangsbohrungen (27) durch eine ringartige Umfangskerbung (41) in der Außenfläche (28) verbunden sind.

12. Ventil nach Anspruch 5 und 11, dadurch gekennzeichnet, daß die Form des Querschnitts der Umfangskerbung (41) sowie deren Öffnungswinkel (f) jener/jenem der Kurvenstücke (40) entsprechen.

13. Ventil nach wenigstens einem der Ansprüche 1 bis 12, dadurch gekennzeichnet, daß an wenigstens einem der aus der Hülse (2) ragenden Enden des Ventilgehäuses (3) zumindest eine an sich bekannte Markierungseinrichtung (33) zum Kenntlichmachen des sich beim Drehen des Ventilgehäuses (3) bzw. der Hülse (2) ändernden Abstandes der Markierungseinrichtung von einer benachbarten Hülsenkante (34) vorgesehen ist und als Markierungseinrichtung mehrere Markierungsringe ($33_e$ bis $3^{?}_d$) dienen, deren jeweiliger Abstand (e) voneinander dem axialen Bewegungsweg des Ventilgehäuses (3) bei einer Umdrehung entspricht.

## Claims

1. A valve for hydraulic systems including at least one flow passage (27) for a flow media, the flow passage being arranged between an inlet (15 and 16 respectively) and an outlet (16 and 15 respectively) and terminating in the outside surface of a valve housing (3) surrounded by a sleeve, with a control groove (40), whose depth (u) increases towards the mouth opening of the flow passage (27), being formed into the outside surface, characterized in that a control groove extending from mouth opening (29) of flow passage (27) is a small curved notch (40) which forms an acute angle of inclination (w) to a radial plane through valve housing (3) and whose length is a multiple of the mouth opening diameter (m).

2. A valve according to claim 1, characterized in that the depth (u) and the notch width (p) of curved notch (40) are at the mouth opening (29) of flow passage (27) only part of the latter's diameter.

3. A valve according to claim 1 or 2 characterized in that the curved notch (40) forms an angle of inclination (w) of about 15° to a radial plane of the outside surface (28).

4. A valve according to any of claims 1 to 3, characterized in that the radius of curvature (r) of curved notch (40) approximately corresponds to the diameter of valve housing (3).

5. A valve according to any of claims 1 to 4, characterized in that the curved notch (40) shows an approximately triangular cross section, the opening angle (f) of the triangular cross section preferably coming up to 60 °C.

6. A valve according to at least one of claims 1 to 5 having control curves terminating in tips, characterized in that the tips of the curves (42) of curved notches (40) are arranged at different spacings (y) from an edge (43) of the outside surface (28).

7. A valve according to claim 6, characterized in that the tips of the curves (42) of curved notches (40) determine a straight line (G) whose spacings ($y_1$, $y_2$) from edge (43) from the first curved notch (40) of the outside surface presented uncoiled steadily increases to the outside surface of the last curved notch ($40_e$).

8. A valve according to any of claims 1 to 7, characterized in that the length of the uncoiled outside surface (28) approximately corresponds to the six- to seven-fold length of curved notch (40).

9. A valve according to any of claims 1 to 8, characterized in that the tip of the curve (42) of a curved notch covers an adjacent mouth opening (29) in the direction of the angle of inclination (w).

10. A valve with a valve housing kept in the sleeve by means of a thread according to at least one of claims 1 to 9, characterized in that the angle of inclination (w) opens between curved notch (40) and the radial plane in the direction of screwing.

11. A valve according to at least one of claims 1 to 10, characterized in that several radial flow passages (27) are connected by means of a peripheral groove (41) in the outside surface (28).

12. A valve according to claims 5 and 11, characterized in that the form of the cross section of the peripheral groove (41) as well as its opening angle (f) correspond to form and opening angle of curved notch (40).

13. A valve according to at least one of claims 1 to 12, characterized in that on at least one end of valve housing (3) projecting from sleeve (2) at least one marking device (33) known as such for marking the distance of the marking device, which varies when valve housing (3) and the sleeve respectively rotates, from an adjacent sleeve edge (34) is provided, and in that several marking grooves ($33_a$ to $33_d$) whose respective distance (e) from one another corresponds to the axial movement path of valve housing (3) when a full revolution is performed serve as a marking device.

## Revendications

1. Valve pour des systèmes hydrauliques étant pourvue d'au moins un passage alésé (27) entre l'orifice d'entrée (15 ou bien 16) et l'orifice de sortie (16 ou bien 15) destiné à un moyen d'écoulement, ledit passage débouchant dans la partie extérieure (28) d'un corps de valve (3) entouré d'une douille (2), à cette bouche étant pratiquée une gorge de distribution (40) dans la partie extérieure (28), d'une

# 0 061 415

profondeur croissante au fur et à mesure qu'elle arrive à la bouche (29) du passage alésé (27), caractérisé en ce que la gorge de distribution partant de la bouche (29) du passage alésé (27) affecte la forme d'une courbe (40) constituant un angle d'inclinaison aigu (w) avec un plan résultant d'une coupe radiale du corps de valve (3) et dont la longueur correspond à un multiple du diamètre (m) de la bouche.

2. Valve selon la revendication 1, caractérisée en ce qu'à la bouche (29) du passage alésé (27) la profondeur (u) ainsi que la largeur (p) de la gorge courbe (40) sont de l'ordre d'une fraction du diamètre (m) de cette bouche.

3. Valve selon la revendication 1 ou 2, caractérisée en ce que la gorge courbe (40) constitue un angle d'inclinaison (w) d'environ 15° avec un plan résultant d'une coupe radiale de la partie extérieure (28).

4. Valve selon une des revendications 1 à 3, caractérisée en ce que le rayon de courbure (r) de la gorge courbe (40) correspond à peu près au diamètre du corps de valve (3).

5. Valve selon une des revendications 1 à 4, caractérisée en ce que la gorge courbe (40) présente une section à peu près triangulaire ayant de préférence un angle d'ouverture de 60°.

6. Valve selon au moins une des revendications 1 à 5, avec des courbes de distribution se terminant en pointes, caractérisée en ce que les pointes (42) des gorges courbes (40) sont rangées en différentes distances (y) par rapport à une arête (43) de la partie extérieure (28).

7. Valve selon la revendication 6 caractérisée en ce que les pointes (42) des gorges courbes (40) constituent une droite (G) dont la distance ($y_1$, $y_2$) à l'arête (43) augmente continûment depuis la première gorge courbe (40) de la partie extérieure (28) représentée en état déroulé jusqu'à la dernière gorge courbe ($40_e$) de celle-ci.

8. Valve selon au moins une des revendications 1 à 7, caractérisée en ce que la longueur de la partie extérieure déroulée (28) se monte environ du sextuple au septuple de la longueur de la gorge courbe (40).

9. Valve selon au moins une des revendications 1 à 8, caractérisée en ce que la pointe (42) d'une gorge courbe déborde la bouche voisine (29) dans la direction de l'angle d'inclinaison (w).

10. Valve avec un corps de valve étant fixé dans la douille par un filet selon au moins une des revendications 1 à 9, caractérisée en ce que l'angle d'inclinaison (w) entre la gorge courbe (40) et le plan résultant d'une coupe radiale s'ouvre dans le sens de rotation du filet.

11. Valve selon au moins une des revendications 1 à 10, caractérisée en ce que plusieurs passages alésés radiaux (27) sont liés par une rainure circonférentielle annulaire (41) se trouvant dans la partie extérieure (28).

12. Valve selon la revendication 5 et 11, caractérisée en ce que la forme de la section de la rainure circonférentielle (41) ainsi que l'angle d'ouverture (f) de celle-ci correspondent à celle/celui des gorges courbes (40).

13. Valve selon au moins une des revendications 1 à 12, caractérisée en ce qu'à au moins une des extrémités du corps de valve (3) sortant de la douille (2) est prévu au moins un dispositif de marquage (33) au fond connu destiné à marquer la distance entre le dispositif de marquage et une arête de douille voisine (34) qui change pendant la rotation du corps de valve (3) ou de la douille (2) et en ce que plusieurs anneaux de marquage (de $33_a$ à $33_d$) servent comme dispositif de marquage, la distance respective (e) desquels correspondant au chemin axiale parcouru par le corps de valve (3) pendant un tour.

7

FIG.1

FIG.2

FIG.1a

FIG.3

FIG.4

FIG.5

FIG.6

FIG.7

FIG.9

FIG.8

FIG.11

FIG.10

4